# EUROPÄISCHE PATENTSCHRIFT

(11) **EP 2 722 219 B1**
(45) Veröffentlichungstag und Bekanntmachung des Hinweises auf die Patenterteilung: **05.12.2018**
(21) Anmeldenummer: 13188763.0
(22) Anmeldetag: 15.10.2013
(51) Int. Cl.: B60L 15/20, B60L 3/00, B62D 59/04, H02P 29/00, H02P 5/00

(54) **Rangierantrieb mit Diagnosemodus**
Manoeuvring drive with diagnostic mode
Entraînement de rangement avec mode de diagnostic

(30) Priorität: 22.10.2012 DE 202012010082 U
(43) Veröffentlichungstag der Anmeldung: 23.04.2014
(73) Patentinhaber: Truma Gerätetechnik GmbH & Co. KG, 85640 Putzbrunn (DE)
(72) Erfinder: Aemisegger, Steve, 81547 München (DE); Gumpp, Daniel, 86356 Neusäss (DE); Müller, Jochen, 85665 Moosach (DE); Schmid, Tobias, 85435 Erding (DE); Müssler, Klaus, 85235 Egenburg (DE); Fernandez, Ana María, 81739 München (DE); Müller, Jörg, 85658 Egmating (DE); Schaurer, Oliver, 85445 Oberding (DE); Möhring, Mario, 85408 Gammelsdorf (DE); Venschott, Mathias, 81825 München (DE); Thiel, Stefan, 83022 Rosenheim (DE); Zawadski, Kamil, 85540 Haar (DE)
(74) Vertreter: Prinz & Partner mbB

(56) Entgegenhaltungen:
- EP-A2- 1 826 107
- JP-A- 2006 067 726
- JP-B2- 3 521 265
- US-A1- 2012 242 467

## Beschreibung

Die Erfindung betrifft einen Rangierantrieb für einen Anhänger.

Bei diesem Anhänger kann es sich beispielsweise um einen Wohnwagen, einen Bootsanhänger, einen Pferdeanhänger, einen Marktanhänger oder Ähnliches handeln. Dieser wird üblicherweise von einer Zugmaschine gezogen. Für einen Wohnwagen dient meist ein Pkw als Zugmaschine. Um den Anhänger in seine endgültige Position zu bringen, beispielsweise auf einem Campingplatz, wird er üblicherweise von der Zugmaschine abgekoppelt und von Hand in die endgültige Position geschoben. Dies ist oft aber mit größeren Anstrengungen verbunden, da mit steigenden Anforderungen an den Komfort solcher Wohnwagen auch deren Gewicht steigt.

Um das Rangieren zu erleichtern, können Anhänger mit Rangierantrieben ausgestattet werden. Bei einem Rangierantrieb handelt es sich um einen Hilfsantrieb, der meist für jedes Rad des Anhängers eine Antriebseinheit mit einem Elektromotor aufweist. Die Elektromotoren werden von einer Batterie im Anhänger mit elektrischer Energie versorgt und können mit den Rädern des Anhängers gekoppelt werden, um diese anzutreiben und damit den Anhänger zu rangieren.

Obwohl ein solcher Rangierantrieb sehr robust aufgebaut ist, kann nicht ausgeschlossen werden, dass es im Einzelfall zu Ausfällen kommt.

Die EP 1 826 107 A2 beschreibt einen Rangierantrieb für einen Anhänger, mit einer Steuerung und mehreren Antriebseinheiten, wobei jede Antriebseinheit einen elektrischen Antriebsmotor mit einem Rotor aufweist.

Die US 2012/242467 A1 beschreibt eine Vorrichtung zur Erzeugung eines Signaltons für ein Fahrzeug mit einem Elektromotor, wobei der Signalton anzeigt dass das Fahrzeug in einem Betriebszustand ist.

Die JP 3 521 265 B2 beschreibt eine Betriebswarneinrichtung, die ein akustisches Signal abgibt, um über einen Betriebszustand eines motorbetriebenen Rollers zu informieren oder ein Warnsignal abzugeben.

Die JP 2006 067726 A beschreibt ein Verfahren zum Informieren eines Benutzers über einen Motorzustand, insbesondere über ein Inspektionsergebnis und eine Betriebsanomalie.

Die Aufgabe der Erfindung besteht darin, einen Rangierantrieb zu schaffen, der im Bedarfsfall einen Bediener oder Monteur darin unterstützt, eventuelle Defekte zu identifizieren.

Zur Lösung dieser Aufgabe ist erfindungsgemäß ein Rangierantrieb für einen Anhänger vorgesehen, mit einer Steuerung und mehreren Antriebseinheiten, wobei jede Antriebseinheit einen elektrischen Antriebsmotor mit einem Rotor aufweist und wobei die Steuerung die Antriebseinheiten in einem Diagnosemodus betreiben kann, in welchem der Rotor um eine Ausgangslage mit einer solchen Frequenz oszilliert, dass ein Ton erzeugt wird, und insbesondere für unterschiedliche Zustände unterschiedliche Töne erzeugt werden, um unterschiedliche Diagnosen oder Fehlerzustände zu identifizieren. Die Erfindung beruht auf dem Grundgedanken, eine Anzeigemöglichkeit an den Antriebseinheiten zu verwirklichen, ohne dass hierfür zusätzliche Bauteile wie beispielsweise Signallampen notwendig sind. Stattdessen wird die Antriebseinheit so betrieben, dass sie einen Ton erzeugt, der repräsentativ für einen vorbestimmten Zustand ist.

Beispielsweise kann ein erster Ton anzeigen, dass ein Funktionstest des Antriebsmotors erfolgreich war, während ein zweiter Ton anzeigen kann, dass ein Funktionstest einer Haltebremse des Antriebsmotors erfolgreich war. Auf diese Weise können unterschiedliche Diagnosen oder Fehlerzustände sehr leicht identifiziert werden.

Gemäß einer Ausgestaltung der Erfindung ist vorgesehen, dass die Steuerung alle Antriebseinheiten gleichzeitig im Diagnosemodus betreiben kann, um einen Zustand der Antriebseinheiten anzuzeigen. Falls im Diagnosemodus eine der Antriebseinheiten keinen Ton erzeugt, gibt dies einem Monteur den Hinweis, dass die entsprechende Antriebseinheit einen Defekt hat.

Es kann auch vorgesehen sein, dass die Steuerung eine der Antriebseinheiten in einem Diagnosemodus betreiben kann, um einen Fehlerzustand des Rangierantriebs oder auch einen ordnungsgemäßen Betrieb des Rangierantriebs anzuzeigen. Bei dieser Ausgestaltung können beispielsweise nacheinander alle Antriebseinheiten angesprochen werden, wodurch leichter diejenige identifiziert werden kann, die nicht in der erwarteten Weise reagiert, als dies der Fall ist, wenn alle Antriebseinheiten gleichzeitig im Diagnosemodus betrieben werden.

Die Erfindung wird nachfolgend anhand einer Ausführungsform beschrieben, die in den beigefügten Zeichnungen dargestellt ist. In diesen zeigen:
- Figur 1 in einer schematischen Seitenansicht einen Anhänger mit Rangierantrieb; und
- Figur 2 in einer schematischen Draufsicht den Anhänger von Figur 1.

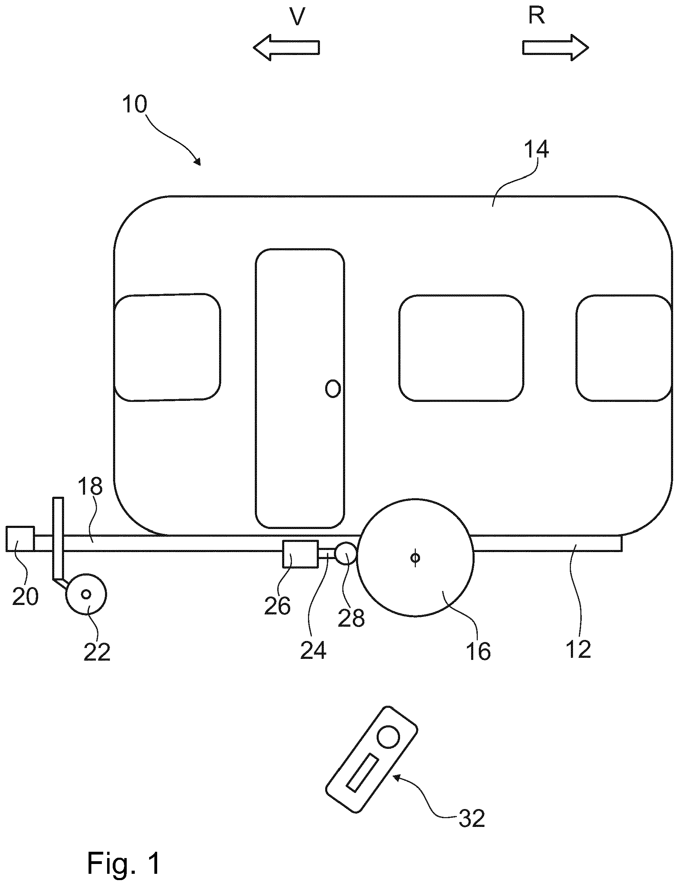

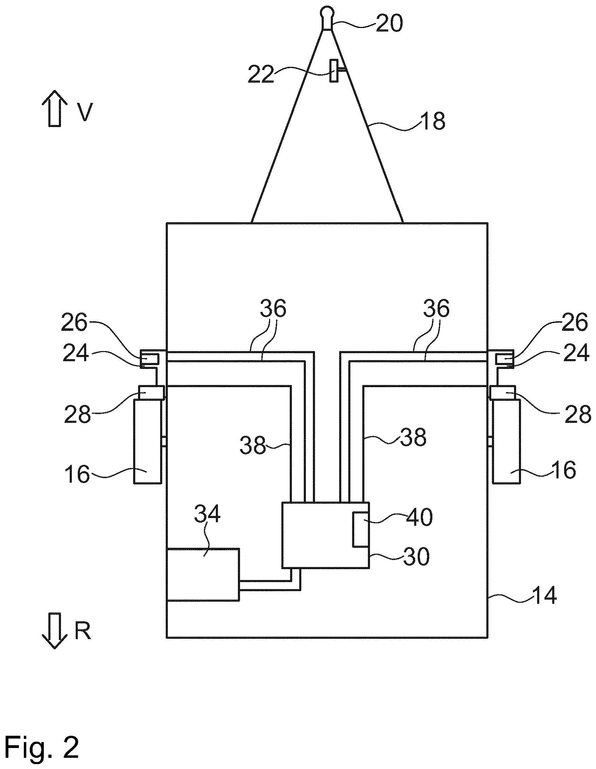

In den Figuren 1 und 2 ist schematisch ein Anhänger 10 (hier ein Wohnwagen) gezeigt, der einen Rahmen 12 aufweist, an dem ein Aufbau 14 angebracht ist. Weiterhin sind zwei Räder 16, eine Deichsel 18 und eine Kupplung 20 vorgesehen. Mit der Kupplung 20 kann der Anhänger 10 an eine Zugmaschine angekoppelt werden. An der Deichsel 18 ist ein Hilfsrad 22 angebracht, welches im abgekoppelten Zustand zum Abstützen des Anhängers 10 dient.

Jedem Rad 16 des Anhängers 10 ist eine Antriebseinheit 24 zugeordnet. Jede Antriebseinheit 24 weist einen Antriebsmotor 26 auf, der üblicherweise als Elektromotor ausgeführt ist, sowie eine Antriebsrolle 28, die vom Antriebsmotor 26 angetrieben werden kann. Die Antriebsrolle 28 kann mit dem zugeordneten Rad 16 des Anhängers 10 in Eingriff gebracht werden.

Weiterhin ist eine Zentraleinheit 30 vorgesehen, die als zentrale Steuerung für die Antriebseinheiten 24 dient und auch für die Kommunikation mit einem Bediener zuständig ist. Dieser kann beispielsweise über eine schematisch in Figur 1 gezeigte Fernbedienung 32 beispielsweise eine Geradeausfahrt oder eine Kurvenfahrt vorgeben.

Im Anhänger 10 ist außerdem eine Spannungsquelle 34 vorgesehen, mittels der die Zentraleinheit 30 und die Antriebseinheiten 24 mit elektrischer Energie versorgt werden können. Die Spannungsquelle kann ein Netzteil sein, das an eine externe Steckdose angeschlossen ist, oder ein Energiespeicher, der sich an Bord des Anhängers befindet. In diesem Fall handelt es sich beim Energiespeicher 34 üblicherweise um einen Akkumulator, umgangssprachlich oft auch als Batterie bezeichnet. Die Antriebsmotoren 26 sind dabei über Anschlussleitungen 36 mit der Zentraleinheit verbunden. Ferner ist für jede Antriebseinheit mindestens eine Steuerleitung 38 vorgesehen, die sich von der Zentraleinheit 30 zu jeder Antriebseinheit 24 erstreckt.

Die Antriebseinheiten 24 zusammen mit der Zentraleinheit 30 bilden einen Rangierantrieb, mit dem der Anhänger 10 verfahren werden kann. Zu diesem Zweck werden die Antriebsrollen 28 in Eingriff mit den Rädern 16 des Anhängers gebracht, sodass sie, wenn sich die Antriebsmotoren 26 drehen, die Räder 16 antreiben. Dies ist grundsätzlich aus dem Stand der Technik bekannt.

Als Ausführungsbeispiel ist hier ein einachsiger Anhänger gezeigt. Dementsprechend weist der Anhänger 10 zwei Räder 16 auf, denen jeweils eine Antriebseinheit 24 zugeordnet ist. Grundsätzlich kann derselbe Rangierantrieb auch bei einem zweiachsigen Anhänger eingesetzt werden. Dabei können weiterhin insgesamt lediglich zwei Antriebseinheiten verwendet werden, sodass auf jeder Seite des Anhängers ein angetriebenes und ein nicht angetriebenes Rad vorhanden ist, oder es können auf jeder Seite des Anhängers zwei Antriebseinheiten eingesetzt werden, sodass jedes Rad des Anhängers angetrieben werden kann.

In der Zentraleinheit 30 ist eine Steuerung 40 implementiert, die einen Diagnosemodus aktivieren kann. In diesem Diagnosemodus werden die Antriebseinheiten 24 so gesteuert, dass der Rotor des Antriebsmotors 26 der entsprechenden Antriebseinheit 24 um eine Ausgangslage herum mit einer Frequenz oszilliert, die sich im hörbaren Bereich befindet. Der Rotor führt also keine Umdrehungen aus, so dass der Diagnosemodus auch aktiviert werden kann, wenn die Antriebsrollen 28 der Antriebseinheiten sich im Eingriff mit den Rädern 16 des Anhängers 10 befinden; die Pendelbewegungen des Rotors um die Ausgangslage herum sind so klein, dass sie nicht zu einer Drehung der Antriebsrollen 28 führen.

Der Diagnosemodus kann beispielsweise darin bestehen, dass alle Antriebseinheiten 24 gleichzeitig so angesteuert werden, dass sie einen Ton erzeugen. Bei dem in den Figuren 1 und 2 gezeigten Ausführungsbeispiel mit zwei Antriebseinheiten lässt sich dann sofort erkennen, ob eine der Antriebseinheiten 24 den erwarteten Ton nicht erzeugt. Dies kann beispielsweise auf einen Defekt hindeuten.

Es ist auch möglich, dass im Diagnosemodus alle Antriebseinheiten 24 nacheinander in einer vorbestimmten Reihenfolge angesprochen werden. Dies ermöglicht es, bei einem Rangierantrieb mit vier Antriebseinheiten sehr schnell zu erkennen, welche der Antriebseinheiten keinen Ton liefert. Der Diagnosemodus kann auch unterschiedliche Töne oder unterschiedliche Tonfolgen, beispielsweise Dauerton oder unterbrochener Ton, verwenden, um unterschiedliche Fehler anzuzeigen. Dies setzt natürlich voraus, dass grundsätzlich die Stromversorgung zum Antriebsmotor 26 der entsprechenden Antriebseinheit 24 gewährleistet ist. Durch unterschiedliche Töne können beispielsweise Defekte in unterschiedlichen Baugruppen der Antriebseinheit angezeigt werden, beispielsweise bei einem Anschwenkmotor oder der Haltebremse des Antriebsmotors.

Beim Rotor des elektrischen Antriebsmotors muss es sich nicht um den Antriebsmotor 26 handeln, der mit den Antriebsrollen 28 versehen ist. Es kann auch für den Diagnosemodus der Rotor eines Anschwenkmotors herangezogen werden, mit dem die Antriebseinheit 24 zwischen einem Ausgangszustand, in welchem die Antriebsrolle 28 mit dem ihr zugeordneten Rad 16 nicht in Eingriff ist, und einem aktivierten Zustand verstellt wird, in welchem die Antriebsrolle 28 am Rad 14 angreift und dieses andrehen kann.

## Patentansprüche

1. Rangierantrieb (24, 30) für einen Anhänger (10), mit einer Steuerung (40) und mehreren Antriebseinheiten (24), wobei jede Antriebseinheit einen elektrischen Antriebsmotor mit einem Rotor aufweist, wobei die Steuerung (40) die Antriebseinheiten (24) in einem Diagnosemodus betreiben kann, in welchem der Rotor um eine Ausgangslage mit einer solchen Frequenz oszilliert, dass ein Ton erzeugt wird, **dadurch gekennzeichnet, dass** die Steuerung (40) für unterschiedliche Zustände unterschiedliche Töne erzeugt, um unterschiedliche Diagnosen oder Fehlerzustände zu identifizieren.

2. Rangierantrieb nach Anspruch 1, **dadurch gekennzeichnet, dass** die Steuerung (40) alle Antriebseinheiten (24) gleichzeitig im Diagnosemodus betreiben kann, um einen Zustand der Antriebseinheiten (24) anzuzeigen.

3. Rangierantrieb nach Anspruch 1 oder Anspruch 2, **dadurch gekennzeichnet, dass** die Steuerung (40) eine der Antriebseinheiten (24) in einem Diagnosemodus betreiben kann, um einen Fehlerzustand des Rangierantriebs (24, 30) anzuzeigen.

4. Rangierantrieb nach einem der vorhergehenden Ansprüche, **dadurch gekennzeichnet, dass** die Steuerung eine der Antriebseinheiten (24) in einem Diagnosemodus betreiben kann, um einen ordnungsgemäßen Betrieb des Rangierantriebs (24, 30) anzuzeigen.

## Claims

1. A maneuvering drive (24, 30) for a trailer (10), comprising a controller (40) and a plurality of drive units (24), each drive unit including an electric drive motor having a rotor, the controller (40) being adapted to operate the drive units (24) in a diagnostic mode, in which the rotor oscillates about a starting position at such a frequency that a tone is produced, **characterized in that** the controller (40) produces different tones for different conditions to identify different diagnoses or fault conditions.

2. The maneuvering drive according to claim 1, **characterized in that** the controller (40) is adapted to operate all drive units (24) in the diagnostic mode at the same time to indicate a condition of the drive units (24).

3. The maneuvering drive according to claim 1 or claim 2, **characterized in that** the controller (40) is adapted to operate one of the drive units (24) in a diagnostic mode to indicate a fault condition of the maneuvering drive (24, 30).

4. The maneuvering drive according to any of the preceding claims, **characterized in that** the controller is adapted to operate one of the drive units (24) in a diagnostic mode to indicate proper operation of the maneuvering drive (24, 30).

## Revendications

1. Entraînement de manoeuvre (24, 30) pour remorque (10), comportant une commande (40) et plusieurs unités d'entraînement (24), chaque unité d'entraînement comprenant un moteur d'entraînement électrique qui présente un rotor, la commande (40) étant apte à faire fonctionner les unités d'entraînement (24) dans un mode de diagnostic dans lequel le rotor oscille autour d'une position initiale à une telle fréquence qu'un ton est généré, **caractérisé en ce que** la commande (40) génère différents tons pour différents états afin d'identifier différents diagnostics ou différents états de défaut.

2. Entraînement de manoeuvre selon la revendication 1, **caractérisé en ce que** la commande (40) est apte à faire fonctionner l'ensemble des unités d'entraînement (24) simultanément dans le mode de diagnostic pour indiquer un état des unités d'entraînement (24).

3. Entraînement de manoeuvre selon la revendication 1 ou la revendication 2, **caractérisé en ce que** la commande (40) est apte à faire fonctionner l'une des unités d'entraînement (24) dans un mode de diagnostic pour indiquer un état de défaut de l'entraînement de manoeuvre (24, 30).

4. Entraînement de manoeuvre selon l'une des revendications précédentes, **caractérisé en ce que** la commande est apte à faire fonctionner l'une des unités d'entraînement (24) dans un mode de diagnostic pour indiquer un fonctionnement correct de l'entraînement de manoeuvre (24, 30).
